(19) **Europäisches Patentamt European Patent Office Office européen des brevets**

(11) **EP 4 506 157 A1**

(12) **EUROPEAN PATENT APPLICATION**
published in accordance with Art. 153(4) EPC

(43) Date of publication:
**12.02.2025 Bulletin 2025/07**

(21) Application number: **23784673.8**

(22) Date of filing: **28.03.2023**

(51) International Patent Classification (IPC):
**B32B 9/00** (2006.01)       **B32B 27/38** (2006.01)
**C08J 5/24** (2006.01)       **B29C 70/48** (2006.01)
**B29C 70/88** (2006.01)

(52) Cooperative Patent Classification (CPC):
**B29C 70/48; B29C 70/88; B32B 9/00; B32B 27/38; C08J 5/24**

(86) International application number:
**PCT/JP2023/012456**

(87) International publication number:
**WO 2023/195383 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.04.2022 JP 2022063292**

(71) Applicant: **Toray Industries, Inc.**
**Tokyo 103-8666 (JP)**

(72) Inventors:
• **HIKOSAKA, Yuki**
**Nagoya-shi, Aichi 455-8502 (JP)**
• **ODANI, Hiroshi**
**Nagoya-shi, Aichi 455-8502 (JP)**

(74) Representative: **Hoefer & Partner Patentanwälte mbB**
**Pilgersheimer Straße 20**
**81543 München (DE)**

(54) **CARBON FIBER COMPOSITE MATERIAL**

(57)     The present invention provides a carbon fiber composite material that is obtained by stacking a plurality of carbon fiber sheets, each of which is composed of carbon fiber bundles aligned parallel to each other, and that is characterized in that: a resin layer which contains a porous resin and an epoxy resin is provided between carbon fiber layers that are adjacent to each other in the thickness direction; and the volume resistivity of the resin layer in the thickness direction is $0.05\,\Omega\cdot m$ to $10\,\Omega\cdot m$. The present invention provides a carbon fiber composite material which is uniformly enhanced in the electrical conductivity in the plate thickness direction, while being capable of exhibiting favorable mechanical characteristics.

EP 4 506 157 A1

**Description**

Technical Field of the Invention

Our invention relates to a carbon fiber composite material. Specifically, it relates to the carbon fiber composite material excellent in conductivity and impact resistance.

Background Art of the Invention

A carbon fiber composite material comprising carbon fiber and resin (Carbon Fiber Reinforced Plastics: CFRP) having characteristics of lightness and high strength has widely been used for applications such as aerospace and automobile.

The CFRP can be formed as achieving both good productivity and high strength by an injection molding method such as Resin Transfer Molding (RTM) and Vacuum assisted Resin Transfer Molding (VaRTM) to cure carbon fiber laminates by impregnating carbon fibers with resin later. In these injection molding methods, the CFRP is molded by impregnating a carbon fiber laminate with low viscosity liquid matrix resin injected to be cured, the carbon fiber laminate consisting of stacked sheet-like base materials made of dry carbon fiber bundle group which has not been preliminarily impregnated with matrix resin.

Since the injection molding method excellent in productivity of the CFRP requires the low viscosity matrix resin, mechanical properties might not be performed better than a CFRP molded by using high viscosity matrix resin used for prepreg. To solve the above-described problem, Patent document 1 suggests an intermediate material comprising carbon fiber unidirectional layer (carbon fiber layer) having a predetermined areal weight and thermoplastic fiber web (nonwoven fabric) having a predetermined thickness. The nonwoven fabric provided between carbon fiber layers can improve mechanical properties of the Compression After Impact (CAI) test which is generally employed to evaluate impact resistance of structural bodies.

However, such a technology gives high impact resistance to fiber-reinforced composite materials while insulative resin layer is formed between carbon fiber layers, so that conductivity of carbon fiber composite material might deteriorate in the plate thickness direction. When the carbon fiber composite material having low conductivity in the plate thickness direction is applied to airplane structure members, windmill blade members or the like, conductive paths are formed only in the carbon fiber orientation direction at the time of thunderbolt so that electric current dissipation ability decreases in the thickness direction (stacking direction). As a result, the thunderbolt might flow great electric current locally to evaporate resin so that overall delamination occurs. Alternatively, the thunderbolt might transmit the electric current which has not been able to be dissipated in the thickness direction through a carbon fiber layer to spark at the edge of carbon fiber composite material.

Patent document 2 discloses a technology for increasing conductivity of carbon fiber composite material in thickness direction, in which a carbon fiber laminate is penetrated by a needle punch to entangle carbon fiber layers to forcibly contact the carbon fiber layers to each other. Patent document 3 suggests a hybrid veil (composite nonwoven fabric) made by dispersing composite particles made of mixture of polymer and conductive material to a nonwoven fabric. Patent document 4 discloses a technology for improving conductivity of CFRP as a whole by filling resin with conductive fillers such as carbon nanotube (CNT).

Prior art documents

Patent documents

Patent document 1: WO2010/046609
Patent document 2: WO2013/150223
Patent document 3: WO2017/083631
Patent document 4: WO2013/141916

Summary of the Invention

Problems to be solved by the Invention

However, the configuration disclosed in Patent document 2 in which carbon fiber layers are contacted forcibly with through-hole penetrated by the needle punch might deteriorate mechanical properties by ununiformly oriented carbon fibers or damaged carbon fibers generated by the needle punch at the time of preparing the through-holes.

Further, the configuration disclosed in Patent document 3 in which composite particles are dispersed in the nonwoven fabric might flow the composite particles out by injected resin in the injection molding method. When the composite particles flow out of the CFRP, conductivity might deteriorate in the plate thickness direction by the outflow of particles. Even when the composite particles remain inside the CFRP, density of particles remaining might be nonuniform to cause locally deteriorated or uneven conductivity in the plate thickness direction. Furthermore, although conductive particles contained in the composite particle should be provided continuously along the thickness direction in order to well exhibit conductivity in the plate thickness direction, the condition of contact depending on the product shape and fiber volume content (Vf) might make uneven conductive path. This uneven conductive path might deteriorate thunder resistance.

Further, the configuration disclosed in Patent document 4 in which resin filled with conductive filler is injected in the carbon fiber laminate might have a problem that conductive fillers are filtrated by the carbon fiber laminate at the time of injection, so that conductivity of cured carbon fiber composite material at the upstream side of resin path of the carbon fiber laminate is different from that of the downstream side, especially for a large structure such as aircraft structure.

Accordingly, it would be helpful to provide a carbon fiber composite material which can exhibit desirable mechanical properties and uniformly increase conductivity in the plate thickness direction.

Means for solving the Problems

To solve the above-described problem, our invention has the following configuration.

(1) A carbon fiber composite material of a laminate of carbon fiber sheets comprising carbon fiber bundles oriented in parallel, wherein a resin layer containing a porous resin and an epoxy resin provided between carbon fiber layers adjacent to each other in a thickness direction has a thickness direction volume resistivity of 0.05 to 10 $\Omega \cdot$m.

(2) The carbon fiber composite material according to (1), wherein the porous resin has a thickness direction opening rate of 60 to 95 %.

(3) The carbon fiber composite material according to (1) or (2), wherein the resin layer includes an epoxy resin rich region having an epoxy resin thickness of 10 $\mu$m or more and an epoxy resin narrowed region having an epoxy resin thickness of less than 10 $\mu$m.

(4) The carbon fiber composite material according to any one of (1) to (3), wherein carbon fiber filaments constituting the carbon fiber bundles have an average diameter of 6 $\mu$m or more and the carbon fiber bundles have an average strand strength of 5,000 MPa or more.

(5) The carbon fiber composite material according to any one of (1) to (4), wherein the porous resin contains at least one kind of resins selected from a group consisting of polyamide resin, polyester resin, polyphenylene sulfide resin, polyetherimide resin, polyethersulfone resin, polyvinyl formal resin, polyetheretherketone resin, polycarbonate resin, polysulfone resin, polyphenylene ether resin, polyimide resin, polyamide-imide resin and phenoxy resin.

(6) The carbon fiber composite material according to any one of (1) to (5), wherein the porous resin has a shape of a nonwoven fabric comprising a long fiber having an average Feret's diameter of 10 to 80 $\mu$m.

(7) The carbon fiber composite material according to any one of (1) to (6), wherein the resin layer is formed by injecting the epoxy resin to porous resin sheets provided with openings having a Feret's diameter of 2 to 5 mm at intervals of 25 mm or less.

(8) The carbon fiber composite material according to any one of (1) to (7), wherein the carbon fiber bundles contain the porous resin of 1 to 5 % by weight relative to that of the carbon fiber bundles.

(9) The carbon fiber composite material according to (3), wherein the epoxy resin narrowed region is provided within a width of 10 to 50 % relative to a full width of the resin layer.

(10) The carbon fiber composite material according to any one of (1) to (9), having a thickness direction conductivity of 1 to 40 S/m.

Effect according to the Invention

Our carbon fiber composite material can exhibit desirable mechanical properties of CFRP while uniformly enhancing thickness direction conductivity as follows.

Brief explanation of the drawings

[Fig. 1] Fig. 1 is a schematic perspective view and a schematic section view of our carbon fiber composite material.

[Fig. 2] Fig. 2 is a schematic perspective view showing an example of base material comprising carbon fiber sheet and porous resin.

[Fig. 3] Fig. 3 is a schematic perspective view and a schematic section view showing an example of our carbon fiber composite material.

[Fig. 4] Fig. 4 is a schematic section view showing an example of our carbon fiber composite material.

[Fig. 5] Fig. 5 is a schematic section view showing another example of our carbon fiber composite material.

[Fig. 6] Fig. 6 is a schematic section view showing yet another example of our carbon fiber composite material.

[Fig. 7] Fig. 7 is a schematic plan view showing an example of our long fiber nonwoven fabric.

[Fig. 8] Fig. 8 is a schematic section view showing yet another example of our carbon fiber composite material.

Embodiments for carrying out the Invention

Hereinafter, examples of our invention will be explained with reference to figures.

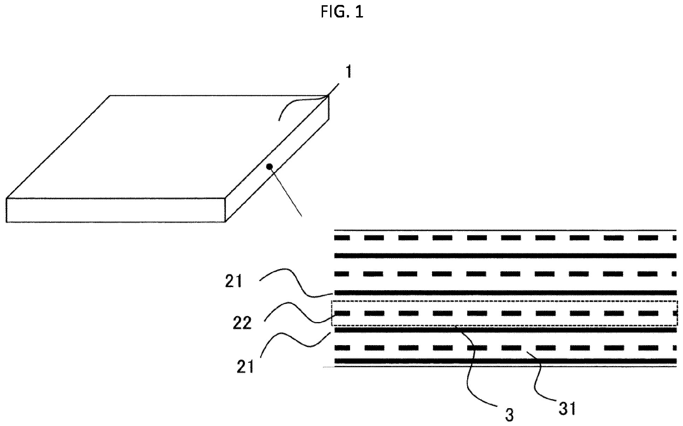

As shown in Fig. 1 of schematic section view, our carbon fiber composite material is a laminate of a plurality of carbon fiber sheets 21 oriented in parallel comprising carbon fiber bundles, in which interlayer resin layer 3 provided between carbon fiber sheets 21 adjacent along the thickness direction comprises porous resin 22 and epoxy resin 31.

It is preferable that the carbon fiber sheet oriented in parallel is woven fabric (unidirectional, bidirectional or multiaxial), knit fabric, braided fabric, carbon fiber sheet oriented unidirectionally (unidirectional sheet) or the like. It is specifically preferable to use the unidirectional sheet to prevent the carbon fiber bundles from bending so that mechanical properties can be improved. It is preferable that the unidirectional sheet is made by fixing tape-shaped carbon fiber bundles oriented unidirectionally by the method of Automated Fiber Placement (AFP).

It is preferable that the carbon fiber composite material is a resin injection molded product cured after injecting epoxy resin to a laminate (which will be called carbon fiber laminate, hereinafter) including layers of base material (which will be called carbon fiber-reinforced base material, hereinafter) comprising the carbon fiber sheet and porous resin. The resin is injected by a method selected according to member dimension or required molding cycle. The method may be VaRTM (Vacuum assisted Resin Transfer Molding) in which resin is injected to a vacuum bag covering a carbon fiber laminate placed in a die by vacuum suction or RTM (Resin Transfer Molding) in which pressurized resin is injected to a carbon fiber laminate placed in a cavity formed among a plurality of dies.

In the specification, epoxy resin is not limited in particular. It is preferable that the epoxy resin has a viscosity of 5 to 500 mPa·s at 90 to 180 °C, and is preferably 5 to 250 mPa·s. The viscosity of 500 mPa·s or less can improve impregnation to the carbon fiber laminate at the time of molding. The viscosity of 5 mPa·s or more can prevent a molding defect of aeration from being generated by decreased viscosity at the time of molding.

Further to exhibit heat resistance and mechanical properties required for applying to aircraft structures or the like, it is preferable to include a glycidylamine type epoxy resin, which comprises tetraglycidyl diaminodiphenyl methane, triglycidyl aminophenol or either derivatives or isomers thereof. It is preferable that the epoxy resin has a curing temperature of 160 to 190 °C, and is more preferably 175 to 190 °C, to exhibit heat resistance and mechanical properties required for applying to aircraft structures or the like.

The carbon fiber-reinforced base material comprising a carbon fiber sheet and porous resin described later can be produced by pressure bonding of carbon fiber sheet with heated porous resin or by bonding particulate resin material applied to carbon fiber sheet to make the resin porous.

It is also preferable that the carbon fiber sheet and a sheet-shaped porous resin are joined by sewing with a supporting yarn (stitching yarn). It is possible that stacks of two or more layers of unidirectional sheets of the carbon fiber sheet and two or more layers of the sheet-shaped porous resin are sewed to make a multiaxial sheet in order of [unidirectional sheet / sheet-shaped porous resin / unidirectional sheet / sheet-shaped porous resin], for example. Such a multiaxial sheet is called NCF (Non crimp fabric) in which carbon fibers are hardly crimped in each layer. It is preferable that the multiaxial sheet is used as fiber-reinforced composite material of large structural member (specifically for primary structural member) of transportation equipment (specifically for aircraft) since molded products injected with resin are excellent in mechanical properties while a plurality of layers can be provided simultaneously by a good provision efficiency.

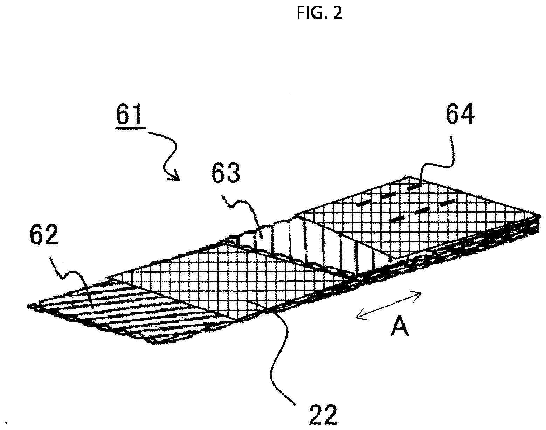

Fig. 2 is a schematic perspective view showing an example of the NCF. At the bottom of NCF 61, +θ layer 62 comprises many reinforcing fiber yarns parallelly provided along a direction (bias direction) oblique to lengthwise direction A and thereon -θ layer 63 comprising many reinforcing fiber yarns parallelly provided along the bias direction is stacked to make their orientation directions different from each other. These two layers are integrated by a supporting yarn (stitching yarn) with sheet-shaped porous resin 22 on the top face and between +θ layer 62 and -θ layer 63.

It is preferable that the carbon fiber has a tensile elastic modulus of 200 to 400 GPa from a viewpoint of balance between mechanical properties and impact resistance, although it is not limited in particular depending on applications. It is preferable that the carbon fiber bundle comprises a carbon fiber filament having a diameter of 6 μm or more and a strand strength of 5,000 MPa or more. These ranges of filament diameter and strand strength can effectively suppress the carbon fiber from buckling to enhance compression characteristics of carbon fiber composite material. Further, the range of filament diameter can improve impregnation in injecting resin with appropriate gaps among filaments so that formability is improved. The filament diameter of carbon fiber can be calculated from total fineness, density and filament number of the carbon fiber. The strand strength of carbon fiber bundle can be calculated by the resin impregnation strand method of JIS R7608.

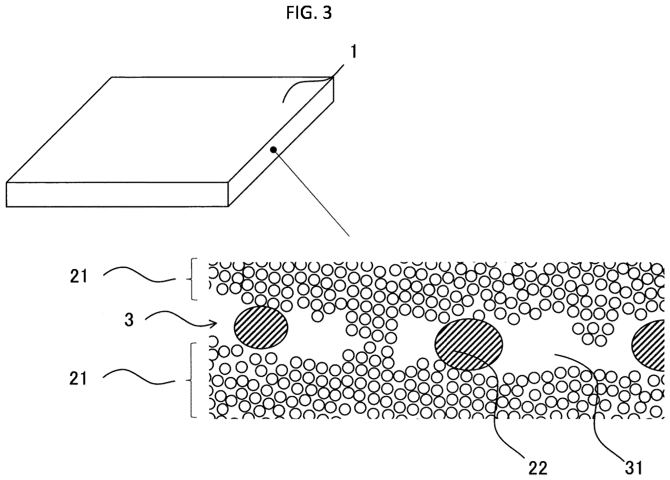

Fig. 3 is a schematic section view showing carbon fiber composite material 1. Our carbon fiber composite material is characterized in that interlayer resin layer 3 has a volume resistivity of 0.05 to 10 $\Omega \cdot$m.

Our carbon fiber composite material provided with such interlayer resin layer 3 can suppress crack progress against impact applied and improve in impact resistance. Such an interlayer resin layer can give a high impact resistance to the carbon fiber composite material although the interlayer resin layer as an insulated layer might deteriorate conductivity of the carbon fiber composite material in the thickness direction.

To achieve both excellent conductivity and impact resistance of carbon fiber composite material in the thickness direction, it is preferable that the interlayer resin layer is provided with a conductive path and has a volume resistivity in a thickness direction of 0.05 to 10 $\Omega \cdot$m. It is more preferably 0.05 to 7 $\Omega \cdot$m, preferably 0.05 to 5 $\Omega \cdot$m. The volume resistivity in the thickness direction of less than 0.05 $\Omega \cdot$m might not achieve good impact resistance even though it might be able to greatly improve in conductivity of the carbon fiber composite material. The volume resistivity in the thickness direction of more than 10 $\Omega \cdot$m might deteriorate conductivity of the carbon fiber composite material in the thickness direction so as not to dissipate high electric current applied by thunderbolt or the like in the carbon fiber composite material, so that fatal damage might be generated by local heat generation or the like.

The volume resistivity of the interlayer resin layer in the thickness direction can be determined by the following method. A section of quasi-isotropic laminate of carbon fiber composite material is polished to provide a sample for evaluating conductivity with electrodes made by vapor-depositing Pt on both end faces in the thickness direction. This sample placed on a movable stage is connected with digital multimeter R6451A made by Advantest on the both end faces in the thickness direction. One of voltage terminals is connected to a probe (micromanipulator probe) to scan the interlayer resin layer exposed on the sample side to be traced with the probe. Thus a relation of moving distance and voltage drop as a whole sample in the thickness direction is obtained to calculate a volume resistivity of interlayer resin layer in the thickness direction from a difference of voltage drop between upper end and lower end of the interlayer resin layer in the thickness direction.

It is preferable that the carbon fiber composite material has 60 to 95 % of opening rate a of a section of the porous resin in the thickness direction of the interlayer resin layer. The opening rate $\alpha$ in the thickness direction is calculated with respect to a cut surface of the interlayer resin layer in the thickness direction by using a ratio of the sum of projected widths of the opening region projected along the thickness direction of the porous resin to observation width W of 25mm.

Specifically, a section of the carbon fiber composite material cut in a direction parallel to the thickness direction and perpendicular to the fiber direction is polished for observation with a digital microscope (VHX-2000 made by KEYENCE) in the thickness direction over a whole observation width W at 100 times, so that opening rate $\alpha$ defined as a ratio of length subtracted from observation width W by the projection widths of the porous resin in the thickness direction in the interlayer resin layer is calculated. In

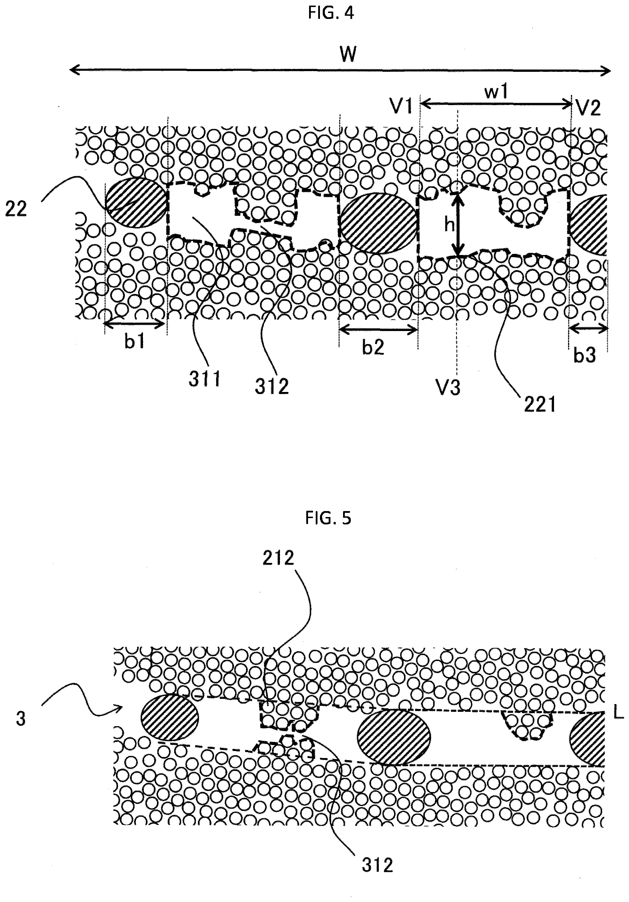

Fig. 4, the opening rate is calculated according to Formula 1 by using width W of observation surface and the sum of projection widths b1+b2+b3 of region filled with porous resin width W of the observation side and porous resin.

$$(\text{Formula 1}) \quad \text{Opening rate } \alpha = [\text{W}-(\text{b1}+\text{b2}+\text{b3})]/\text{W}$$

Hereinafter, the observation width W may be abbreviated as W while the sum of widths S of the narrow region may be abbreviated as S.

In the opening region of porous resin contained in the interlayer resin layer of the carbon fiber composite material, the volume resistivity of the interlayer resin layer can be reduced in the thickness direction through a conductive path comprising upper and lower carbon fiber sheets adjacently approached or contacted to the interlayer resin layer in the thickness direction. The opening rate $\alpha$ of less than 60% might deteriorate the approach or contact of carbon fiber sheets through opening sections of porous resin, so that the volume resistivity of interlayer resin layer increases in the thickness direction and the impregnation of resin deteriorates by narrowed gaps in the molding process. The opening rate $\alpha$ of more than 95% might deteriorate impact resistance by reduced proportion of porous resin 22 in the interlayer resin layer although the volume resistivity of the interlayer resin layer can be reduced in the thickness direction.

In opening region 221 of porous resin 22 in thickness direction shown in Fig. 4, it is preferable that the interlayer resin layer of the carbon fiber composite material comprises an epoxy resin rich region 311 having a thickness of 10 $\mu$m or more and a narrow region having a thickness of less than 10 $\mu$m. The width of opening region 221 in the section of interlayer resin layer 3 in the thickness direction is defined as a width of region of opening section of porous resin 22 projected along the thickness direction. The width equals to w1 of region between perpendicular lines V1 and V2 having a distance of minimum length of opening section of porous resin 22 in the thickness direction. The thickness of opening region 221 is defined as a thickness of region surrounded by carbon fiber surface layers of upper and lower carbon fiber sheets 21 adjacent to the interlayer resin layer. In the opening regions, epoxy resin rich region 311 is defined as a region having 10 $\mu$m or more of thickness, namely distance h, between upper and lower carbon fiber sheets 21 while narrow region 312 is defined as a region having distance h of less than 10 $\mu$m. Said distance h of carbon fiber sheet 21 is determined as a minimum length between intersections of carbon fiber of upper and lower carbon fiber sheets 21 on perpendicular line V3 which is perpendicular to the in-plane direction of porous resin 22.

The epoxy resin rich region having a thickness of 10 $\mu$m or more can improve impact resistance by preventing crack from developing in the interlayer resin layer when impact shock is applied. The impact resistance of interlayer resin layer consisting of the narrow region might deteriorate without such an epoxy resin rich region preventing crack from developing in the interlayer resin layer. It is preferable that the epoxy resin rich region has a thickness of less than 150 $\mu$m so that mechanical properties as a local defect are prevented from being affected, although it is not limited in particular.

The volume resistivity can be reduced by narrow region 312 in which carbon fibers as conductive material approach to function as conductive path connecting carbon fiber sheets adjacent along the thickness direction. It is preferable that the narrow region has a narrower thickness to enhance the function as the conductive path. It is more preferable that the carbon fibers contact each other.

It is preferable that narrow region 312 is formed by locally narrowing the distance between carbon fiber sheets 21 with protrusion 212 of carbon fiber constituting carbon fiber sheet 21 adjacent along the thickness direction of interlayer resin layer protruding to the inside of interlayer resin layer 3. As shown in Fig. 5, protrusion 212 indicates a region filled with carbon fibers constituting carbon fiber sheet 21 protruding to the inside of interlayer resin layer over straight line L drawn between right and left ends of epoxy resin rich region 311 at the upper or lower end of porous resin 22. It is possible that the protrusion comprises a carbon fiber bundle constituting both upper and lower carbon fiber sheets adjacent to interlayer resin layer 3 along the thickness direction and that the protrusion comprises a carbon fiber bundle constituting only one of the carbon fiber sheets while the other carbon fiber sheet is provided close to the protrusion.

It is preferable that the protrusion is formed by repulsion of carbon fiber bundle constituting the carbon fiber sheet adjacent to opening region 221 of porous resin along the thickness direction. It is possible that protrusions are increased by heating and pressing the carbon fiber laminate before molding to add the narrow regions. The protrusion can be increased more locally by using a heating plate having a salient at the time of heating and pressing. Further, the protrusion can be increased by partially thinning the plate thickness of carbon fiber composite material.

From viewpoints of enhanced impact resistance and deformability of interlayer resin layer 3 enhanced when impact shock is applied, it is preferable that porous resin 22 contains at least one kind of resin selected from a group consisting of polyamide resin, polyester resin, polyphenylene sulfide resin, polyetherimide resin, polyethersulfone resin, polyvinyl formal resin, polyetheretherketone resin, polycarbonate resin, polysulfone resin, polyphenylene ether resin, polyimide resin, polyamide-imide resin and phenoxy resin. From these raw materials, the resin can be selected depending on desired impact resistance and mechanical properties.

It is preferable that porous resin 22 has a sheet-like shape having a thickness and an opening in a direction of the thickness. It is more preferable that porous resin 22 has a shape of nonwoven fabric, mat, net, mesh, woven fabric, knitted fabric, short fiber group, perforated film, porous film or the like. Such an opening can make it possible to form a protrusion in our carbon fiber composite material and secure a resin flow path along the thickness direction at the time of resin injection.

To set thickness-direction opening rate $\alpha$ defined by Formula 1 of section of the carbon fiber composite material in the thickness direction to 60 to 95 %, it is preferable that thickness-direction opening rate $\beta$ of porous resin to be molded into the carbon fiber composite material is 60 to 98 %. The thickness-direction opening rate $\beta$ of the porous resin can be calculated as a ratio of width of void region containing no resin constituting the porous resin to width of observation region when the porous resin is observed at 100 times with a digital microscope (VHX-2000 made by KEYENCE) along the thickness direction.

As an embodiment of our invention, it is possible that the porous resin is a porous film. The porous film can be prepared by forming through-holes in a film made of desirable porous resin as a raw material. To form the through-holes by perforation process with heated pin or needle punch, it is preferable that the thickness direction opening rate $\beta$ of porous film after perforation is 60 to 98 %. It is preferable that the porous film has a thickness of 20 to 100 $\mu$m, so that a conductive path in the carbon fiber composite material is formed efficiently in the thickness direction. From a viewpoint of form stability in handling, it is preferable that the porous film has a thickness of 50 to 100 $\mu$m.

In another embodiment of our invention, the porous resin can be a knitted fabric. The knitted fabric can be prepared by warp knit of weft knit from the above-described desirable fibers of porous resin raw material. It is preferable that the thickness direction opening rate $\beta$ is 60 to 98 %. It is preferable that the knitted fabric has a thickness of 20 to 100 $\mu$m determined by the A method of JIS L1096, so that a conductive path in the carbon fiber composite material is formed efficiently in the thickness direction. The knitted fabric of porous resin can secure resin flow paths in the plane direction at the time of molding.

In another embodiment of our invention, the porous resin can be a long fiber nonwoven fabric. The long fiber nonwoven fabric can be prepared by a general production method such as spunbonding and meltblowing from the above-described desirable porous resin as a raw material. Since the long fiber nonwoven fabric comprises continuous fibers, good opening rate and handling ability can be achieved as securing resin paths in the plane direction. Further, impact resistance improves in the carbon fiber composite material uniformly since fibers constituting the long fiber nonwoven fabric are oriented randomly in the interlayer resin layer.

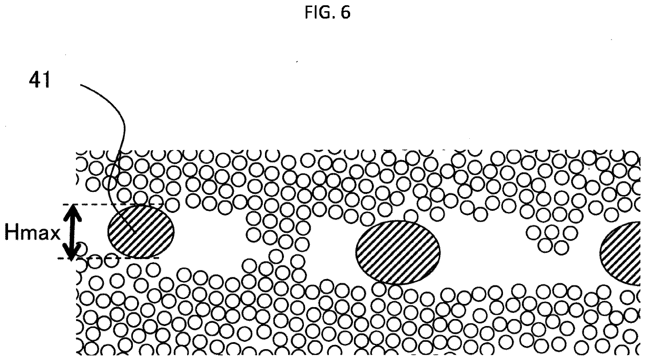

It is preferable that a cross section of the resin fiber constituting the long fiber nonwoven fabric has an average value of maximum length Hmax of the thickness direction interlayer resin layer measured along the thickness direction of the carbon fiber composite material is 10 to 80 $\mu$m. As shown in Fig. 6, the average value of maximum length Hmax is defined as an average value of thickness direction Feret's diameters (unidirectional tangent diameter) measured randomly at 10 points as thickness direction maximum lengths of fiber 41 constituting the nonwoven fabric prepared by cutting the carbon fiber composite material along the thickness direction and perpendicularly to the fiber direction and polishing the thickness directional section to be observed by observation width W of 25mm in interlayer resin layer 3 with a digital microscope (VHX-2000 made by KEYENCE). The Hmax of less than 10$\mu$m might deteriorate impact resistance since a crack tends to develop in the interlayer resin layer when impact shock is applied. The Hmax of more than 80$\mu$m might deteriorate conductivity and mechanical properties since excessively thick average thickness of interlayer resin layer increases a distance between carbon fiber sheets so that protrusions cannot be located closer.

In an embodiment of our invention, it is preferable that the porous resin is a long fiber nonwoven fabric comprising a plurality of thickness direction openings X having a Feret's diameter of 2 to 5 mm, wherein another thickness direction opening X exists within a range of 25 mm from an outer edge of one thickness direction opening X. It is preferable that the thickness direction opening X is a region surrounded by long fibers constituting long fiber nonwoven fabric 5 when long fiber nonwoven fabric 5 is projected in the thickness direction, wherein circumscribed rectangle 51 has a long side and a short side of each 2 to 5 mm.

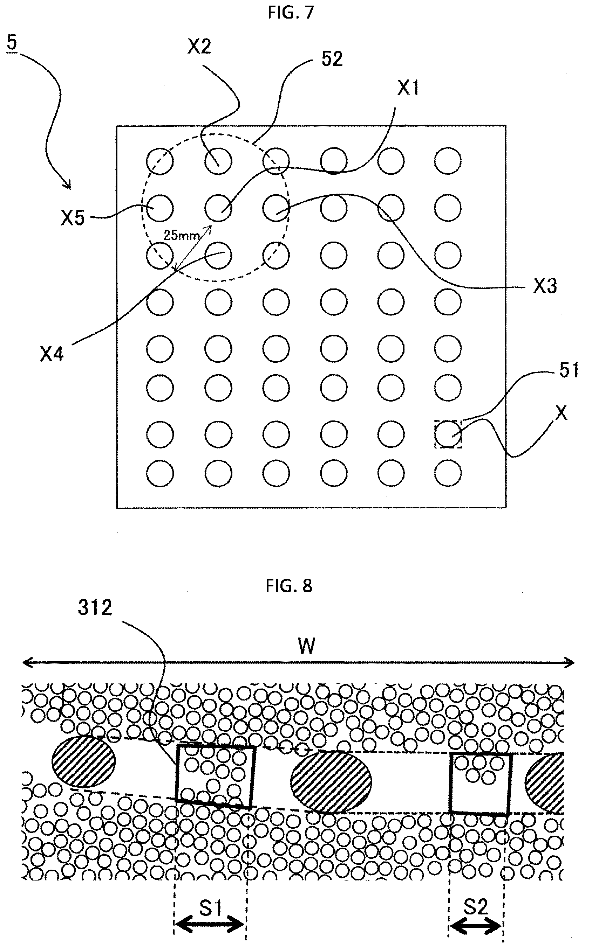

It is preferable that long fiber nonwoven fabric 5 comprises a plurality of thickness direction openings X, wherein another thickness direction opening X exists within a range of 25 mm from an outer edge of one thickness direction opening X. For example as shown in Fig. 7, four thickness direction openings X2, X3, X4 and X5 exist within range 52 of 25mm from the outer edge of thickness direction opening X1.

It is preferable that thickness direction opening X is formed by mechanical processing with a needle punch or punch, or is formed by opening up a notch of long fiber nonwoven fabric to which tension is applied, the notch being formed by slit processing under a tension applied. It can also be formed by stabbing a long fiber nonwoven fabric with a heated pin, or is formed by adjusting a condition of producing the long fiber nonwoven fabric by meltblowing or spunbonding. It is preferable that thickness direction openings X are provided regularly with a distance of 25 mm or less, so that a thickness direction volume resistivity of interlayer resin layer of the carbon fiber composite material can be controlled freely.

The Feret's diameter of thickness direction opening X of less than 2mm might decrease the difference from the size of opening formed in producing the long fiber nonwoven fabric to decrease the reduction effect of volume resistivity in the interlayer resin of carbon fiber composite material. The Feret's diameter of more than 5mm might cause a defect of larger region in which long fiber nonwoven fabric does not exist locally in the interlayer resin layer of carbon fiber composite material. The distance of more than 25mm from the outer edge of one thickness direction opening X to another thickness direction opening X might tend to have uneven thickness direction volume resistivity in the interlayer resin layer of carbon fiber composite material.

In the carbon fiber composite material, porous resin 22 has an areal weight, which means a weight per unit area, of 1 to 5 % of areal weight of carbon fiber sheet 21. The areal weight of porous resin 22 of less than 1% of the areal weight of carbon fiber sheet 21 might not exhibit a desirable impact resistance. The areal weight of porous resin 22 of more than 5% of the areal weight of carbon fiber sheet 21 might increase the proportion of resin constituting porous resin 22 in interlayer resin layer 3 to decrease elastic modulus, so that desirable mechanical properties cannot be exhibited.

It is preferable that a thickness direction section of the carbon fiber composite material has a ratio of sum S of widths of epoxy resin narrowed regions 312 to observation width W, satisfying the relation of 10% < S/W < 50%. The ratio of sum of narrowed region widths to observation width can be calculated by dividing sum S of projection widths of epoxy resin narrowed region 312 by observation width W, the projection widths being measured after polishing a section of the carbon fiber composite material cut along the thickness direction and perpendicularly to the fiber direction to be observed at width W of 25mm with a digital microscope (VHX-2000 made by KEYENCE). For example as shown in Fig. 8, sum S of horizontal direction projection widths S1 and S2 of epoxy resin narrowed region is divided by observation width W to calculate the ratio. The S/W of less than 10% might decrease conductive paths of interlayer resin layer 3 to increase thickness direction volume resistivity of interlayer resin 3. The S/W of more than 50% might increase regions having a very small distance between carbon fiber sheets to tend to develop a crack when impact shock is applied, so that impact resistance might deteriorate.

It is preferable that the carbon fiber composite material has a thickness direction conductivity of 1 to 40 S/m. It is more preferable that the thickness direction conductivity is 5 to 40 S/m, preferably 10 to 40 S/m. The thickness direction conductivity within the range can suppress electric damage caused by thunderbolt or the like to the carbon fiber composite material. Specifically for aircraft application, decreased metal mesh provided on the surface of member is also advantageous from viewpoints of weight saving and lightning protection. The thickness direction conductivity can be determined by four-terminal method according to DIN EN2004-1. Conductive paste is applied to the thickness direction surface of carbon fiber composite material to prepare sample pieces, which is subject to measurement of thickness direction resistance with digital multimeter R6581 made by Advantest company to calculate conductivity.

[Examples]

Hereinafter, our invention will be explained with reference to figures. Raw materials used in Examples and Comparative examples are as follows. Meanwhile, our invention is not limited to these Example and Comparative example.

(Example 1)

(Evaluation method of carbon fiber bundle)

(i) Measurement of diameter of carbon fiber filament constituting carbon fiber bundle

The filament diameter of carbon fiber is calculated from total fineness, density and filament number of carbon fiber bundle. The total fineness which is a mass per 1m is calculated by dividing mass by 10 measured after absolutely drying the carbon fiber bundle having 10m length for 2 hours at 120°C. The density of the carbon fiber is determined as an average value of 3 times measurements of the density with an automatic gas pycnometer (AccuPyc 1330) after absolute drying for 2 hours at 120°C.
The filament diameter of carbon fiber bundle T800S-24K (made by Toray Industries) used in this Example was 5 $\mu$m.

(ii) Measurement of strand strength of carbon fiber bundle

The strand strength of carbon fiber bundle is determined as an average value of 10 carbon fiber bundles of strand strengths measured by the resin impregnated strand test according to JIS R7608:2004. The strand strength of carbon fiber bundle T800S-24K used in this Example was 5.9 GPa.

(Preparation of carbon fiber-reinforced base material)

On a workbench, carbon fiber bundle T800S-24K unwound from a bobbin is cut into a predetermined length to be oriented in parallel over an area of approximately 300mm x 300mm. Edges of the oriented carbon fiber bundle group are fixed to prepare a layer of carbon fiber sheet.
A sheet of approximately 300mm x 300mm of long fiber nonwoven fabric A made of polyamide resin having areal weight of 6 g/m $^2$ is placed on the first layer of carbon fiber sheet. Then, the second layer of carbon fiber sheet is placed thereon as being oriented perpendicular to the fiber direction of the first layer. Thereon is placed another sheet of approximately 300mm x 300mm of long fiber nonwoven fabric A made of the polyamide resin having areal weight of 6 g/m$^2$ is placed. Edges of total four layers of sheet are fixed to prepare an orthogonally biaxial sheet.
One layer of the prepared carbon fiber sheet had mass per unit area of 300 g/m$^2$ while nonwoven fabric A of porous resin had mass per unit area was 2.0% of that of the carbon fiber sheet. Further, nonwoven fabric A was observed at 100 times magnification with a digital microscope VHX-2000 (made by KEYENCE) along the thickness direction and found openings X having a Feret's diameter of 0.5 to 1 mm in 20 observed regions. No openings X having a Feret's diameter of 2 to 5 mm were found therein.
Furthermore, nonwoven fabric A was observed at 100 times magnification with a digital microscope VHX-2000 (made by KEYENCE) along the thickness direction to calculate a proportion of area without fibers constituting the nonwoven fabric in the observed region. Opening rate $\beta$ determined as an average value of the proportions observed at 10 areas was 85%.
In the same manner, [+45°/-45°] orthogonal biaxial sheet-like carbon fiber-reinforced base material was prepared.

(Molding of carbon fiber composite material)

The prepared carbon fiber-reinforced base material was stacked on a tool plate to make a laminate configuration as follows.
[(+45°/-45°), (0°/90°)]$_{2S}$

A whole material covered by a bag film was subject to vacuum suction. Then, epoxy resin A having curing temperature of 180°C used for aircraft was injected into the film inside by the VaRTM method. The base material heated to 180°C or more for 2 hours was cured to produce a carbon fiber composite material. It took 5 minutes to transfer the resin from the injection hole to the vacuum suction hole, which means a good impregnation. The produced carbon fiber composite material had fiber volume content (Vf) of 58%.

(Evaluation of carbon fiber composite material)

(i) Measurement of thickness direction volume resistivity of interlayer resin layer

Samples of 8mm x 8mm for evaluating conductivity were prepared by cutting the carbon fiber composite material produced as described above and polishing the section. Both end faces in the thickness direction were provided with electrodes formed by depositing Pt. This sample was placed on a moving stage and both thickness direction end faces were connected to R6451A digital multimeter made by Advantest. One of voltage terminals was connected to a probe (micromanipulator probe) to scan the interlayer resin layer on the sample side to be traced with the probe to determine the volume resistivity of sample from movement distance and voltage drop. The measurement was performed 15 times and averaged to determine the thickness direction volume resistivity ($\Omega \cdot m$) of interlayer resin layer of carbon fiber composite material. The result of this Example was 0.5 $\Omega \cdot m$, included in the range of 0.05 to 10 $\Omega \cdot m$.

(ii) Measurement of thickness direction conductivity of carbon fiber composite material

Samples of 40mm x 40mm were prepared by cutting the carbon fiber composite material produced as described above and polishing both surfaces to remove resin layers. Then conductive paste N-2057 (made by Shoei chemical industry) was applied with a bar coater to both surfaces at thickness of approximately $70 \mu m$ and cured for 30 min in a hot wind oven kept at 180°C to prepare samples for evaluating conductivity. The thickness direction resistance of the sample was measured by the four terminals method with digital multimeter R6581 made by Advantest. The measurement was performed 6 times and averaged to determine the thickness direction conductivity (S/m) of carbon fiber composite material. The thickness direction conductivity was 15 S/m, included in desirable thickness direction conductivity range of 1 to 40 S/m.

(iii) Measurement of thickness direction opening rate a of porous resin in interlayer resin layer

The produced carbon fiber composite material was cut with a cutter device using an abrasive grind wheel into 25mm width of observation surface along directions of 0° and 90°. Then it was embedded to resin for observation which can be cured at room temperature to prepare embedded observation samples. After the embedding resin was cured, the sample was polished with an automatic abrasion device (APM-128K Automax polisher 200HV made by Refine Tec Ltd.) to prepare an observation sample. The sample was observed at 200 times with a digital microscope (VHX-2000 made by KEYENCE) to measure projection widths projected along the thickness direction of porous resin in each interlayer resin layer, which was namely polyamide fiber constituting long fiber nonwoven fabric A, to calculate the sum. The thickness direction opening rate a of nonwoven fabric was calculated as ratio of [25 mm of observation width - the sum] / [observation width] in the thickness direction section of interlayer resin layer. The thickness direction opening rate a of nonwoven fabric A was 82%, included in a desirable thickness direction opening rate a range of 60 to 95%.

(iv) Measurement of thickness of epoxy resin rich region in interlayer resin layer and confirmation of narrowed region

In the same manner as (iii), the observation sample was observed with the microscope at 200 times. In the section of sample, thicknesses of $10 \mu m$ or more were selected for measurement at 20 points or more in the nonwoven fabric opening region in the interlayer resin layer, except for sections between two carbon fiber sheets including carbon fiber sheet oriented in the cutting direction (0° layer when cut along 0° direction while 90° layer when cut along 90° direction). The thickness of epoxy resin rich region in the interlayer resin layer was determined as an average of the measured thicknesses. The thickness of the epoxy resin rich region in this Example was $25 \mu m$. Further, it was confirmed that a narrowed region has a thickness of less than $10 \mu m$ and has been sectioned by carbon fiber constituting carbon fiber sheets existing above and below the opening region of nonwoven fabric protruding into the epoxy resin rich region.

(v) Measurement of average value (average Feret's diameter) of thickness direction maximum length of fiber constituting nonwoven fabric

In the same manner as (iii), the observation sample was observed with the microscope at 200 times. The thickness direction Feret's diameters of polyamide fiber constituting nonwoven fabric A existing in the interlayer resin layer of each sample were measured at 10 points in each interlayer resin layer and averaged to determine average Feret's diameter of resin fiber constituting nonwoven fabric in the interlayer resin layer. The average Feret's diameter of fiber constituting nonwoven fabric A of the interlayer resin layer of this Example was 35μm included in a desirable average Feret's diameter range of 10 to 80μm.

(vi) Measurement of ratio of epoxy resin narrowed region to observation width of interlayer resin layer

In the same manner as (iii), the observation sample was observed with the microscope at 200 times. Narrowed region widths of 10μm or less were selected for measurement between two carbon fiber sheets, except for sections between two carbon fiber sheets including carbon fiber sheet oriented in the cutting direction (0° layer when cut along 0° direction while 90° layer when cut along 90° direction). The ratio S/W of the sum of narrowed region widths to observation width W=25mm was calculated. The ratio S/W of the sum of narrowed region widths to observation width W was 15% included in a desirable S/W range of 10 to 50%.

(vii) Measurement of Compression After Impact (CAI) of carbon fiber composite material

The carbon fiber composite material produced as described above was cut into rectangular test pieces of 150mm height x 100mm width. An impact of falling weight of 6.7 J/mm thickness of test piece was applied to the center of the test piece according to JIS K7089 (1996) to determine a residual compressive strength under room temperature according to JIS K7089(1996). The measurement was performed 6 times to determine Compression After Impact CAI (MPa) by calculating the average value.
The CAI in this Example was 280 MPa.

(viii) Measurement of Open Hole Compression (OHC) of carbon fiber composite material

The carbon fiber composite material produced as described above was cut into rectangular test pieces of 305mm x 38mm. A hole having diameter 6.35mm was formed in the center of the test piece. The Open Hole Compression was determined under room temperature according to testing standard ASTM D6484. The measurement was performed 6 times to determine Open Hole Compression OHC (MPa) by calculating the average value.
The OHC in this Example was 290 MPa.

(Examples 2-5)

Carbon fiber composite materials were prepared in the same manner as Example 1, except that long fiber nonwoven fabrics B, C, D, E, F and G were used as porous resin to perform each measurement. The measurement results are shown in Table 1 confirming that the carbon fiber composite materials have a thickness direction volume resistivity of interlayer resin layer of 0.05 to 10 Ω·m while achieving excellent impact resistance and compression characteristics.
In Example 2, long fiber nonwoven fabric B having areal weight of 4 g/m² was used. Opening rate β of 55% was adjusted by decreasing diameters of fiber constituting nonwoven fabric B. As a result, the obtained carbon fiber composite material had 50% of thickness direction opening rate α of nonwoven fabric in the thickness direction section of interlayer resin layer, outside a desirable range of 60 to 95%. However, the fiber constituting the nonwoven fabric had 15 μm of average Feret's diameter falling within a desirable range of 10 to 80 μm by decreasing diameter of fiber constituting the nonwoven fabric. Further, ratio S/W of sum of narrowed region widths to observation width in the interlayer resin layer was 12% falling within a desirable range of 10 to 50%. As a result, the interlayer resin layer had thickness direction volume resistivity of 9.0 Ω·m falling within the range of 0.05 to 10 Ω·m. Further, the obtained carbon fiber composite material had thickness direction conductivity of 1.5 S/m falling within a desirable range of 1 to 40 S/m. Furthermore, the OHC was 292 MPa, which means excellent compression properties.
In Example 3, the nonwoven fabric had areal weight of 6 g/m² while having thickness direction opening rate a of 90% in the thickness direction section of interlayer resin layer, falling within a desirable range of 60 to 95% as a result of applying long fiber nonwoven fabric C of which opening rate β was 95% adjusted by increasing diameter of fiber constituting nonwoven fabric A. On the other hand, the fiber constituting the nonwoven fabric had 90 μm of greater average Feret's diameter by increasing diameter of fiber constituting the nonwoven fabric while the ratio S/W of sum of narrowed region widths to observation width in the interlayer resin layer was 8%. However, the interlayer resin layer had thickness direction volume resistivity of 7.3 Ω·m falling within the range of 0.05 to 10 Ω·m. Further, the obtained carbon fiber composite material had thickness direction conductivity of 2 S/m falling within a desirable range of 1 to 40 S/m.
In Example 4, the nonwoven fabric had thickness direction opening rate a of 90% in the thickness direction section of interlayer resin layer, falling within a desirable range of 60 to 95% as a result of applying long fiber nonwoven fabric D of which opening rate $\beta$ was 92% adjusted by decreasing areal weight down to 4 g/m$^2$. The interlayer resin layer had thickness direction volume resistivity of 0.1 $\Omega\cdot$m falling within the range of 0.05 to 10 $\Omega\cdot$m.

In Example 5, the fiber constituting the nonwoven fabric had 20 $\mu$m of average Feret's diameter falling within a desirable range of 10 to 80 $\mu$m by using nonwoven fabric E having opening rate $\beta$ of 65% which had been prepared at 100°C and pressure of 0.1 MPa by heating and compressing long fiber nonwoven fabric A having 6 g/m$^2$ of areal weight. The interlayer resin layer had thickness direction volume resistivity of 0.1 $\Omega\cdot$m, falling within the range of 0.05 to 10 $\Omega\cdot$m. The CAI was 285 MPa showing good impact resistance.

In Example 6, the fiber constituting the nonwoven fabric had 20 $\mu$m of average Feret's diameter falling within a desirable range of 10 to 80 $\mu$m by using nonwoven fabric F having opening rate $\beta$ of 75% which had been prepared at 100°C and pressure of 0.1 MPa by heating and compressing long fiber nonwoven fabric D having 4 g/m$^2$ of areal weight. The interlayer resin layer had thickness direction volume resistivity of 0.07 $\Omega\cdot$m, falling within the range of 0.05 to 10 $\Omega\cdot$m. The CAI was 285 MPa showing good impact resistance. The OHC was 293 MPa showing excellent compression properties.

Example 7 used long fiber nonwoven fabric G made of polyamide provided with holes as thickness direction opening X having 3mm diameter at intervals of 20mm with a needle punch. The thickness direction opening X had Feret's diameter of 3mm falling within a desirable thickness direction opening X range of 2 to 5 mm. The obtained carbon fiber composite material had 90% of thickness direction opening rate $\alpha$ of nonwoven fabric in the thickness direction section of interlayer resin layer, falling within a desirable range of 60 to 95%. The interlayer resin layer had thickness direction volume resistivity of 0.06 $\Omega\cdot$m, falling within the range of 0.05 to 10 $\Omega\cdot$m. The CAI was 280 MPa showing good impact resistance.

(Examples 8-11)

Carbon fiber composite materials were prepared in the same manner as Examples 1 to 4, except for using carbon fiber bundle 1 (total filament number: 24,000) prepared by spinning and calcining copolymer containing acrylonitrile for measurements. According to a result of the same measurement as Example 1, carbon fiber bundle 1 had carbon fiber filament diameter of 7 $\mu$m and strand strength of 5.7 GPa.

As shown in Table 1 of measurement results of the carbon fiber composite materials, the interlayer resin layer had thickness direction volume resistivity of 0.05 to 10 $\Omega\cdot$m showing good impact resistance. In these Examples, the OHC strength was over 300 MPa, showing excellent compression characteristics. Further, the impregnation time was less than 5 min, showing particularly good formability.

(Comparative examples 1-4)

Table 2 shows Comparative examples 1 to 4 applying nonwoven fabrics H, I, J and K as porous resin. The condition of carbon fiber sheet, matrix resin and molding method were the same as Example 1. In Comparative examples 1 and 2 applying nonwoven fabrics H and I having smaller thickness direction opening rate $\beta$, the nonwoven fabric had smaller thickness direction opening rate $\alpha$ in the thickness direction section of interlayer resin layer of the nonwoven fabric in the thickness direction section below a desirable range of 60 to 95% to decrease area of the epoxy resin narrowed region of which width ratio to the observation width of narrowed region was below a desirable range of 10 to 50%. Therefore, the interlayer resin layer had a volume resistivity outside a desirable range of f 0.05 to 10 $\Omega\cdot$m while the carbon fiber composite material had a thickness direction conductivity outside a desirable range of 1 to 40 S/m.

Comparative example 3 used nonwoven fabric J having smaller diameter of fiber constituting the nonwoven fabric and greater opening rate. Nonwoven fabric G having areal weight of 2 g/m$^2$ had 0.7% of areal weight ratio to that of carbon fiber sheet below a desirable range of 1 to 5%. The fiber constituting the nonwoven fabric had an average Feret's diameter in the section below a desirable range of 10 to 80 $\mu$m. As a result, the epoxy resin rich region had thickness of 7 $\mu$m below a desirable range of 10 $\mu$m or more. Consequently, although the interlayer resin layer had volume resistivity of 0.005 $\Omega\cdot$m below a desirable range of 0.05 to 10 $\Omega\cdot$m showing a great conductivity, the epoxy rich region was thinned in the interlayer resin layer to deteriorate impact resistance, so that the CAI decreased.

In Comparative example 4 using nonwoven fabric K having areal weight of 14 g/m$^2$, the fiber constituting the nonwoven fabric had 120 $\mu$m of average Feret's diameter in the section of carbon fiber composite material outside a desirable range of 10 to 80 $\mu$m. As a result, the interlayer resin layer had 3% of width ratio of narrowed region to the observation width below a desirable range of 10 to 50%. Further, the interlayer resin layer had volume resistivity of 20 $\Omega\cdot$m above a desirable range of 0.05 to 10 $\Omega\cdot$m. Furthermore, the carbon fiber composite material had thickness direction conductivity of 0.5 S/m below a desirable range of 1 to 40 S/m.

[Table 1]

| | Configuration of carbon fiber bundle | | | Configuration of porous resin sheet | | | | Forming result | | Evaluation result of carbon fiber composite material | | | | | | | |
|---|---|---|---|---|---|---|---|---|---|---|---|---|---|---|---|---|---|
| | Name | Fiber diameter | Strength | Name | Areal weight | Weight content to carbon fiber sheet | Opening rate $\beta$ | Impregnation Time | Vf | Opening rate $\alpha$ in thickness direction | Thickness of epoxy resin rich region | Ratio S/W of sum S of narrowed region widths to observation width W | Average Feret diameter of nonwoven fabric fiber | Volume resistivity of interlayer resin layer in thickness direction | Conductivity of carbon fiber composite material in thickness direction | CAI | OH-C |
| | | μm | GPa | | g/m² | % | % | min | % | % | μm | % | μm | Ω·m | S/m | MPa | MPa |
| Example 1 | T800-S-24K | 5 | 5.9 | Nonwoven fabric A | 6 | 2.0 | 85 | 5 | 58 | 82 | 25 | 20 | 35 | 0.5 | 15 | 280 | 290 |
| Example 2 | T800-S-24K | 5 | 5.9 | Nonwoven fabric B | 4 | 1.3 | 55 | 7 | 59 | 50 | 11 | 12 | 15 | 9.0 | 1.5 | 270 | 292 |
| Example 3 | T800-S-24K | 5 | 5.9 | Nonwoven fabric C | 6 | 2.0 | 95 | 6 | 57 | 90 | 70 | 8 | 90 | 7.3 | 2 | 270 | 287 |
| Example 4 | T800-S-24K | 5 | 5.9 | **Nonwoven** fabric D | 4 | 1.3 | 92 | 7 | 59 | 90 | 25 | 35 | 35 | 0.1 | 25 | 260 | 290 |
| Example 5 | T800-S-24K | 5 | 5.9 | Nonwoven fabric E | 6 | 2.0 | 65 | 7 | 59 | 62 | 17 | 35 | 20 | 0.1 | 25 | 285 | 290 |
| Example 6 | T800-S-24K | 5 | 5.9 | Nonwoven fabric F | 4 | 1.3 | 75 | 8 | 60 | 73 | 15 | 43 | 20 | 0.07 | 35 | 280 | 293 |

EP 4 506 157 A1

| | Configuration of carbon fiber bundle | | | Configuration of porous resin sheet | | | | Forming result | | | Evaluation result of carbon fiber composite material | | | | | | | |
|---|---|---|---|---|---|---|---|---|---|---|---|---|---|---|---|---|---|---|
| | Name | Fiber diameter | Strength | Name | Areal weight | Weight content to carbon fiber sheet | Opening rate $\beta$ | Impregnation Time | Vf | | Opening rate $\alpha$ in thickness direction | Thickness of epoxy resin rich region | Ratio S/W of sum S of narrowed region widths to observation width W | Average Feret diameter of nonwoven fabric fiber | Volume resistivity of interlayer resin layer in thickness direction | Conductivity of carbon fiber composite material in thickness direction | CAI | OH-C |
| | | μm | GPa | | g/m² | % | % | min | % | | % | μm | % | μm | Ω·m | S/m | MPa | MPa |
| Example 7 | T800-S-24K | 5 | 5.9 | Nonwoven fabric G | 6 | 2.0 | 95 | 5 | 58 | | 90 | 25 | 45 | 35 | 0.06 | 35 | 280 | 290 |
| Example 8 | Carbon fiber bundle 1 | 7 | 5.7 | Nonwoven fabric A | 6 | 2.0 | 85 | 3 | 58 | | 80 | 25 | 20 | 36 | 0.5 | 15 | 295 | 302 |
| Example 9 | Carbon fiber bundle 1 | 7 | 5.7 | Nonwoven fabric B | 4 | 1.3 | 55 | 4 | 59 | | 51 | 10 | 12 | 15 | 8.9 | 1.5 | 290 | 305 |
| Example 10 | Carbon fiber bundle 1 | 7 | 5.7 | Nonwoven fabric C | 6 | 2.0 | 95 | 4 | 57 | | 90 | 70 | 8 | 90 | 7.3 | 2 | 290 | 300 |

| | Configuration of carbon fiber bundle | | | Configuration of porous resin sheet | | | | Forming result | | | Evaluation result of carbon fiber composite material | | | | | | | |
|---|---|---|---|---|---|---|---|---|---|---|---|---|---|---|---|---|---|---|
| | Name | Fiber diameter | Strength | Name | Areal weight | Weight content to carbon fiber sheet | Opening rate $\beta$ | Impregnation Time | Vf | Opening rate $\alpha$ in thickness direction | Thickness of epoxy resin rich region | Ratio S/W of sum S of narrowed region widths to observation width W | Average Feret diameter of nonwoven fabric fiber | Volume resistivity of interlayer resin layer in thickness direction | Conductivity of carbon fiber composite material in thickness direction | CAI | OH-C |
| | | $\mu$m | GPa | | g/m$^2$ | % | % | min | % | % | $\mu$m | % | $\mu$m | $\Omega \cdot$m | S/m | MP-a | MPa |
| Example 11 | Carbon fiber bundle 1 | 7 | 5.7 | Nonwoven fabric D | 4 | 1.3 | 92 | 4 | 59 | 92 | 25 | 36 | 35 | 0.1 | 25 | 287 | 310 |

[Table 2]

| | Configuration of carbon fiber bundle | | | Configuration of porous resin sheet | | | | Forming result | | Evaluation result of carbon fiber composite material | | | | | | | | |
|---|---|---|---|---|---|---|---|---|---|---|---|---|---|---|---|---|---|
| Name | Name | Fiber diameter | Strength | Name | Areal weight | Weight content to carbon fiber sheet | Opening rate $\beta$ | Impregnation Time | Vf | Opening rate $\alpha$ in thickness direction | Thickness of epoxy resin rich region | Ratio S/W of sum S of narrowed region widths to observation width W | Average Feret diameter of nonwoven fabric fiber | Volume resistivity of interlayer resin layer in thickness direction | Conductivity of carbon fiber composite material in thickness direction | CAI | OHC |
| | | $\mu$m | GPa | | g/m$^2$ | % | % | min | % | % | $\mu$m | % | $\mu$m | $\Omega \cdot$m | S/m | MPa | MPa |
| Comparative example 1 | T800-S-24K | 5 | 5.9 | Nonwoven fabric H | 14 | 4.7 | 50 | 6 | 56 | 45 | 25 | 8 | 40 | 15 | 0.7 | 280 | 285 |
| Comparative example 2 | T800-S-24K | 5 | 5.9 | Nonwoven fabric I | 6 | 2.0 | 40 | 10 | 58 | 35 | 12 | 5 | 15 | 180 | 0.5 | 295 | 280 |
| Comparative example 3 | T800-S-24K | 5 | 5.9 | Nonwoven fabric J | 2 | 0.7 | 72 | 5 | 59 | 70 | 7 | Unable to define | 9 | 0.005 | 35 | 180 | 285 |
| Comparative example 4 | T800-S-24K | 5 | 5.9 | Nonwoven fabric K | 14 | 4.7 | 80 | 5 | 57 | 75 | 90 | 3 | 120 | 20 | 0.5 | 250 | 28n |

Industrial Applications of the Invention

Our carbon fiber composite material can be applied to large size members for aircrafts, automobiles, ships or the like. It can also be applied to general industrial use such as windmill blade.

Explanation of symbols

1: carbon fiber composite material
21: carbon fiber sheet
212: protrusion
22: porous resin
221: opening region
3: interlayer resin layer
31: epoxy resin
311: epoxy resin rich region
312: narrowed region
41: fiber constituting nonwoven fabric
5: long fiber nonwoven fabric
51: circumscribed rectangle
52: range within 25mm from outer edge of opening X
61: NCF
62: +0 layer
63: -0 layer
64: supporting yarn

**Claims**

1.  A carbon fiber composite material of a laminate of carbon fiber sheets comprising carbon fiber bundles oriented in parallel, wherein a resin layer containing a porous resin and an epoxy resin provided between carbon fiber layers adjacent to each other in a thickness direction has a thickness direction volume resistivity of 0.05 to 10 $\Omega \cdot$m.

2.  The carbon fiber composite material according to claim 1, wherein the porous resin has a thickness direction opening rate of 60 to 95 %.

3.  The carbon fiber composite material according to claim 1 or 2, wherein the resin layer includes an epoxy resin rich region having an epoxy resin thickness of 10 $\mu$m or more and an epoxy resin narrowed region having an epoxy resin thickness of less than 10 $\mu$m.

4.  The carbon fiber composite material according to any one of claims 1 to 3, wherein carbon fiber filaments constituting the carbon fiber bundles have an average diameter of 6 $\mu$m or more and the carbon fiber bundles have an average strand strength of 5,000 MPa or more.

5.  The carbon fiber composite material according to any one of claims 1 to 4, wherein the porous resin contains at least one kind of resins selected from a group consisting of polyamide resin, polyester resin, polyphenylene sulfide resin, polyetherimide resin, polyethersulfone resin, polyvinyl formal resin, polyetheretherketone resin, polycarbonate resin, polysulfone resin, polyphenylene ether resin, polyimide resin, polyamide-imide resin and phenoxy resin.

6.  The carbon fiber composite material according to any one of claims 1 to 5, wherein the porous resin has a shape of a nonwoven fabric comprising a long fiber having an average Feret's diameter of 10 to 80 $\mu$m.

7.  The carbon fiber composite material according to any one of claims 1 to 6, wherein the resin layer is formed by injecting the epoxy resin to porous resin sheets provided with openings having a Feret's diameter of 2 to 5 mm at intervals of 25 mm or less.

8.  The carbon fiber composite material according to any one of claims 1 to 7, wherein the carbon fiber bundles contain the porous resin of 1 to 5 % by weight relative to that of the carbon fiber bundles.

9. The carbon fiber composite material according to claim 3, wherein the epoxy resin narrowed region is provided within a width of 10 to 50 % relative to a full width of the resin layer.

10. The carbon fiber composite material according to claim 1, having a thickness direction conductivity of 1 to 40 S/m.

FIG. 1

FIG. 2

EP 4 506 157 A1

FIG. 3

20

FIG. 4

FIG. 5

FIG. 6

FIG. 7

FIG. 8

## INTERNATIONAL SEARCH REPORT

| International application No. |
|---|
| **PCT/JP2023/012456** |

### A. CLASSIFICATION OF SUBJECT MATTER

*B32B 9/00*(2006.01)i; *B32B 27/38*(2006.01)i; *C08J 5/24*(2006.01)i; *B29C 70/48*(2006.01)i; *B29C 70/88*(2006.01)i
FI: B29C70/88; B29C70/48; B32B9/00 A; B32B27/38; C08J5/24 CFC

According to International Patent Classification (IPC) or to both national classification and IPC

### B. FIELDS SEARCHED

Minimum documentation searched (classification system followed by classification symbols)

B29C70/00-70/88; B32B1/00-43/00; C08J5/24; B29B11/16; B29C39/00-39/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-155460 A (TORAY IND., INC.) 15 July 2010 (2010-07-15) claims, paragraphs [0018]-[0141], fig. 1-8 | 1-10 |
| A | JP 2015-518069 A (HEXCEL REINFORCEMENTS) 25 June 2015 (2015-06-25) entire text | 1-10 |
| A | JP 2015-521120 A (HEXCEL REINFORCEMENTS) 27 July 2015 (2015-07-27) entire text | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/012456**

| Patent document cited in search report | | | Publication date (day/month/year) | Patent family member(s) | | | Publication date (day/month/year) |
|---|---|---|---|---|---|---|---|
| JP | 2010-155460 | A | 15 July 2010 | US | 6995099 | B1 | |
| | | | | claims, column 3, line 63 to column 21, line 29, fig. 1-8 | | | |
| | | | | EP | 1125728 | A1 | |
| JP | 2015-518069 | A | 25 June 2015 | US | 2015/0050450 | A1 | |
| | | | | entire text | | | |
| | | | | WO | 2013/150223 | A2 | |
| JP | 2015-521120 | A | 27 July 2015 | US | 2015/0050450 | A1 | |
| | | | | entire text | | | |
| | | | | WO | 2013/160604 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010046609 A
- WO 2013150223 A
- WO 2017083631 A
- WO 2013141916 A